# EUROPEAN PATENT SPECIFICATION

(11) **EP 1 945 580 B1**
(45) Date of publication and mention of the grant of the patent: **05.08.2009**
(21) Application number: 06806652.1
(22) Date of filing: 01.11.2006
(51) Int. Cl.: C02F 9/00, C02F 1/44, C02F 1/46, C02F 1/52, C02F 101/16

(54) **PROCESS AND SYSTEM FOR THE TREATMENT OF WATER CONTAMINATED WITH NITRATES**
VERFAHREN UND SYSTEM ZUR BEHANDLUNG VON MIT NITRATEN KONTAMINIERTEM WASSER
PROCEDE ET SYSTEME DE TRAITEMENT D'EAU CONTAMINEE PAR DES NITRATES

(30) Priority: 09.11.2005 ES 200502788
(43) Date of publication of application: 23.07.2008
(73) Proprietor: TAPIAS PARCERISAS, Josep, 08328 ALELLA, BARCELONA (ES); Dalmau Farnés, Jaime, 08400 Granollers, Barcelona (ES)
(72) Inventor: TAPIAS PARCERISAS, Josep, 08328 ALELLA, BARCELONA (ES); Dalmau Farnés, Jaime, 08400 Granollers, Barcelona (ES)
(74) Representative: Lauer, Joachim
(86) International application number: PCT/EP2006/010493
(87) International publication number: WO 2007/054230

(56) References cited:
- EP-A2- 0 291 330
- WO-A-02/40406
- WO-A-20/05070836
- ES-A1- 2 173 035

## Description

### Object of the invention

The present invention refers to a procedure and to a system for the treatment of water contaminated with nitrates.

### Background of the invention

The pollution of the aquifers by nitrates proceeding from cattle developments, fertilisers and, in some cases, for the very composition of the area constitutes an important problem, since high levels of nitrates or nitrites in the water prevent its distribution and consumption.

Nowadays, some procedures exist to eliminate, or at least to reduce, the level of nitrates contained in contaminated waters, some of which can be found in the following documents: European patent EP 291 330, the Spanish patent ES 2065129 T, the English patent GB 2267290 and the Spanish patent ES 2173035.

Generally, to eliminate or at least to reduce the quantity of nitrates contained in contaminated waters requires the treatment of all of the water to be treated by means of electrolytic processes and of ionic interchange which can cause various problems, among which it is necessary to emphasize the high cost of the treatment, the problem caused by the periodic decontamination of the electrolytic cells and resins by means of the utilization of regenerators that extract the nitrates accumulated in them. The use of these regenerators also requires the use of water for regular washes and the elimination of a part of the water to be treated.

### Description of the invention

The procedure of the present invention presents various positive particularities which allow for noticeable reduction of the nitrates contained in highly contaminated waters to suitable levels for consumption, with the particularity that only part of the contaminated water is treated, notably reducing the cost of the treatment and that all of the contaminated water is recovered and not a part of it, as happens in some of the aforementioned documents.

This procedure contemplates the transfer of a part of the water contaminated with nitrates directly, i.e. without any treatment, to a distribution tank, and the treatment of the remaining part of the contaminated water with a system of osmosis which results in a quantity of contaminated water with a low level of nitrate contamination, which is incorporated into the distribution tank, and a quantity of water with a high concentration of nitrates. This quantity of contaminated water with a high concentration of nitrates and administered by the system of osmosis is subjected to an electrolytic process, in a first phase, with a high frequency cell with a high reduction area for the transformation of the nitrates into nitrites and of the nitrites into nitrogen in gaseous form, this final form then being freed into the atmosphere.

In a second phase, the water treated by means of the electrolytic process is submitted to a physical chemical process in which flocculation and decantation of the slurry and solid particles contained in the water are undertaken, and are subsequently separate, in a third phase, by means of a filtration treatment.

Finally, the quantity of water submitted to the electrolytic, physical chemical and filtration processes is added to the distribution tank, where it is mixed with the quantity of water that has not been submitted to any treatment and with the quantity of water with a low concentration of nitrates which has been produced by the osmosis system, the aforementioned distribution tank thereby having a quantity of water equal to that of the beginning.

The parts or percentages of water which reach the distribution tank without any treatment, only submitted to the osmosis treatment and submitted to the complete treatment can be changed depending on the degree of nitrates in the water to be treated and of the level of nitrates needed to be obtained finally in all of the water upon final collection in the distribution tank.

In this invention, a system is also included to undertake the treatment of the water contaminated with nitrates, according to the described procedure, said system presents various characteristics which are to be found in the claims and are easily understood by the example of usage shown in the attached figures.

### Description of the figures.

To complement the description being done and with the aim of facilitating understanding of the characteristics of the invention, the present description is accompanied by a set of drawings in which, with illustrative and not limitative character, the following has been represented:

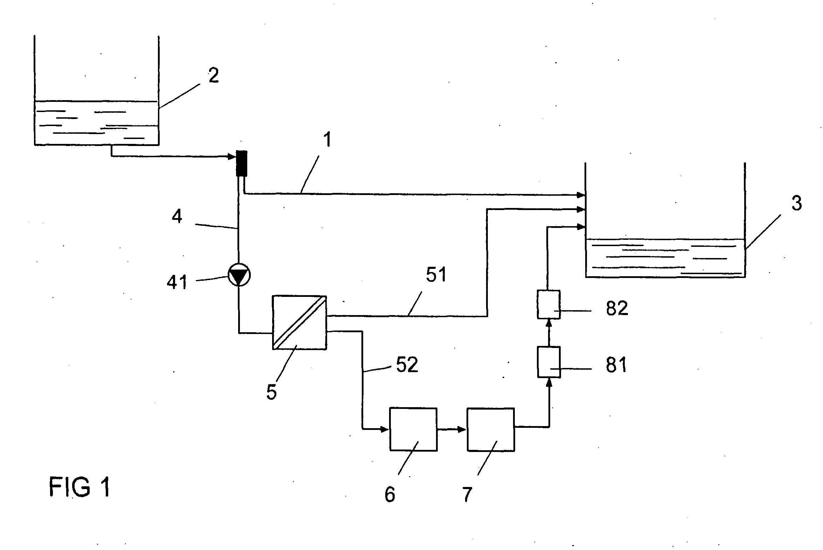

- Figure 1. shows a schematic view of the system for the treatment of waters contaminated with nitrates, in accordance with the aforementioned procedure.

### Preferred usage of the invention

In example of usage shown in the figures, the system of the invention comprises a first channel (1) for the direct passing of a part of the water for treating from a tank or aquifer (2) container of contaminated water to a distribution tank (3) and a second channel (4) for directing the remaining part of the water towards an osmosis system (5) equipped with special polyamide membranes to obtain a higher concentration of nitrates.

The above mentioned osmosis system produces osmotic water with a low concentration of nitrates through an exit and, through a second exit, rejected water with a high concentration of nitrates.

The exit of the osmosis system which provides water with a low concentration of nitrates is connected by means of a channel (51) to the distribution tank (3).

The other exit of the osmosis system, which provides water with a high concentration of nitrates, is connected to a channel (52) in which the following are inserted and arranged in series: a high frequency electrolytic cell (6), a phase of physical chemical treatment (7) and means of filtration, the exit of said channel (52) being connected to the distribution tank (3).

The aforementioned electrolytic cell is high frequency and is provided with electrodes which act alternately, with an asymmetric timing, as anode and cathode creating a high reduction area, in which the nitrates turn into nitrites and the nitrites into nitrogen in gaseous form, with the nitrogen being freed into the atmosphere.

In the figure shown, the means of filtration inserted in channel (52) are represented schematically by a press filter (81) in charge of compacting and extracting the solid residues and by a refining filter (82) placed after the press filter (81).

This system will incorporate hydraulic parts (valves, distributors and pumps) necessary to control the relation or proportion of water to be treated which passes directly from the aquifer or tank (2) to the distribution tank and towards the system of osmosis depending, on one hand, on the existing concentration of nitrates in the water contained in the tank or aquifer (2) and, on the other hand, on the admissible quantity of nitrates in the water obtained in the distribution tank (3) once a part of it has been treated.

In the first practical case, and in agreement with the procedure of the invention, 300 m³ (cubic metres) of water contaminated with a concentration of nitrates of 100 mg./l. (Milligrams per litre) are treated, passing 100 m³, of contaminated water directly from the aquifer (2) to the distribution tank (3) through the channel (1), while the remaining 200 m³ are pushed by high pressure, i.e. by means of a hydraulic pump (41), towards the osmosis system (5) which provides 70 m³ of water with a low concentration of nitrates, from 1 to 2 mg./l., which are led to the distribution tank (3) by the channel (51), and 130 m³ of water with a high concentration of nitrates, of the order of 145 mg./l.

These 130 m³ of water with a high concentration of nitrates are led through the channel (52) and subsequently treated: in the high frequency electrolytic cell (6), where an important part of the nitrates in the form of nitrogen in gaseous form are eliminated, in the physical chemical treatment phase (7), where the residues and solid particles contained in the water are accumulated and decanted, and in the means of filtration (81, 82) where the above mentioned residues are eliminated, finally obtaining 130 m³ of water treated with a concentration of nitrates of approximately 70 mg./l.

These 130 m³ are delivered finally to the distribution tank, to be mixed with the 100 m³ that have not been treated and with the 70 m³ that have only been treated in the osmosis system, obtaining in total, in the above mentioned distribution tank (3), the initial 300 m³ of water for treating, but with a concentration of nitrates of the order of 65 mg./l.

In the second example of usage, 350 m³ (cubic metres) of water contaminated with a concentration of nitrates of 45 mg./l. (Milligrams per litre) are treated, passing 100 m³ of contaminated water directly from the aquifer (2) to the distribution tank (3). The 250 m³ are treated by the osmosis system (5) which provides 150 m³ of water with a concentration of nitrates of the order of 2 mug./l., which is led to the distribution tank (3), and 100 m³ of water with a concentration of nitrates of 98 mg./l.

This 100 m³ of water is subsequently treated: in the high frequency electrolytic cell (6), in the physical chemical treatment phase (7) and in the means of filtration (81, 82) reducing its concentration of nitrates to approximately 40 mg./l. before being incorporated into the distribution tank.

In this second example, the initial 350 m³ of water in the distribution tank is obtained, with a concentration of nitrates around 25 mg./l.

Therefore, with the system and the procedure of the invention it is possible to notably reduce the concentration of the nitrates in highly contaminated waters, treating only part of the water and obtaining, with reduced treatment costs, the same initial quantity of water but with a concentration of nitrates that allows its distribution and consumption without risks for the health.

Having described sufficiently the nature of the invention, as well as various practical examples of usage, it is made known to all concerned that the materials, form, size and arrangement of the described, elements will be able to be modified, only when it does not suppose an alteration of the essential characteristics of the invention claimed hereafter.

## Claims

1. Procedure for the treatment of waters contaminated by nitrates; **characterized in that** it comprises: a) the transfer of a part of the water contaminated directly, without treating, to a distribution tank, b) the treatment of the rest of the contaminated water with an osmosis system for obtaining a quantity of water with a low concentration of nitrates, which is incorporated into the distribution tank, and of a quantity of water with a high concentration of nitrates that is submitted: in a first phase, to an electrolytic process with a high reduction area for the transformation of the nitrates to nitrites and from the nitrites to nitrogen in gaseous form which is freed into the atmosphere; in a second phase, to a physical chemical process where flocculation and decantation of the elements or solid particles contained in the water is produced, and in a third phase, to a filtration process in which the residues and solid particles contained in the water are separated, finally collecting the treated and filtered water to the distribution tank.

2. System for the treatment of waters contaminated by nitrates; **characterized in that** it includes the first channel (1) for the direct passing of a part of the water for treating from a tank or aquifer (2) container of the contaminated water to a distribution tank (3), the second channel (4) for pushing of the remaining part of the water towards an osmosis system (5) provided with an exit for the water with a low concentration of nitrates provided by the osmosis system, said exit being connected by means of a channel (51) to the distribution tank, and of a water exit with a high concentration of nitrates provided by the osmosis system, said exit being connected to channel (52) where the following are to be found inserted and arranged in series: an electrolytic cell (6), a physical chemical treatment phase (7) and various means of filtration, being connected the exit of the above mentioned channel (52) to the distribution tank (3).

3. System, according to claim 3, **characterized in that** the osmosis system (5) is equipped with special membranes of polyamide to obtain a higher concentration of nitrates.

4. System, according to claim 2, **characterized in that** the electrolytic cell is of a high frequency type and is provided with electrodes which act alternately with asymmetric timing as anode and cathode.

5. System, according to claim 2, **characterized in that** the means of filtration includes a press filter (81) for the elimination of the residues.

6. System, according to claim 5, **characterized in that** the means of filtration, in addition, comprises a refining filter (82) at the exit of the press filter (81).

## Patentansprüche

1. Verfahren zur Behandlung von mit Nitraten kontaminiertem Wasser, **dadurch gekennzeichnet, dass** es umfasst: a) die direkte Überführung eines Teils des unbehandelten, kontaminierten Wassers in einen Verteilungstank, b) die Behandlung des restlichen kontaminierten Wassers in einem Osmose-System, wodurch ein Anteil Wasser mit einer niedrigen Konzentration an Nitraten erhalten wird, welcher in den Verteilungstank überführt wird, und ein Anteil mit einer hohen Konzentration an Nitraten erhalten wird, welcher in einer ersten Phase einem elektrolytischen Prozess zugeführt wird, wobei der elektrolytische Prozess einen hohen Reduktionbereich für die Transformation von den Nitraten zu Nitriten und von den Nitriten zu Stickstoff in der gasförmigen Form, welcher in die Atmosphäre freigegeben wird, aufweist; in einer zweiten Phase einem physikalisch-chemischen Prozess zugeführt wird, in dem Flockenbildung und Abschlämmung der Elemente oder der festen Partikel, die im Wasser enthalten sind, herbeigeführt wird; und in einer dritten Phase einem Filtrationsprozess zugeführt wird, in dem die Rückstände und die festen Partikel, die im Wasser enthalten sind, abgetrennt werden und schliesslich das behandelte und gefilterte Wasser in den Verteilungstank überführt wird.

2. System für die Behandlung von mit Nitraten kontaminiertem Wasser, **dadurch gekennzeichnet, dass** es beinhaltet: eine erste Leitung (1) für die direkte Überführung eines Teils des zu behandelnden Wassers aus einem Tank oder Aquifer-Behälter (2) für das kontaminierte Wasser in einen Verteilungstank (3), eine zweite Leitung (4), um den restlichen Teil des Wassers zum Osmose-System (5) zu drücken, wobei ein Ausgang des Osmose-Systems für das Wasser mit einer niedrigen Konzentration an Nitraten vorhanden ist, welcher über eine Leitung (51) mit dem Verteilungstank verbunden ist, und wobei ein Ausgang des Osmose-Systems für das Wasser mit einer hohen Konzentration an Nitraten vorhanden ist, welcher über eine Leitung (52) mit dem Verteilungstank (3) verbunden ist, wobei in der Leitung (52) folgendes eingesetzt und in Reihenfolge angeordnet ist: eine elektrolytische Zelle (6), eine physikalisch-chemische Prozessphase (7) und verschiedene Mittel der Filtration.

3. System nach Anspruch 2, **dadurch gekennzeichnet, dass** das Osmose-System (5) mit einer speziellen Membran aus Polyamid bestückt ist, um eine höhere Konzentrierung der Nitrate zu erhalten.

4. System nach Anspruch 2, **dadurch gekennzeichnet, dass** die elektrolytische Zelle von einer Hochfrequenz-Art ist und mit Elektroden versehen ist, welche wechselnd mit asymetrischer Zeitsteuerung als Anode und Kathode dienen.

5. System nach Anspruch 2, **dadurch gekennzeichnet, dass** die Mittel der Filtration einen Druckfilter (81) für die Beseitigung von Rückständen aufweisen.

6. System nach Anspruch 5, **dadurch gekennzeichnet, dass** die Mittel der Filtration am Ausgang des Druckfilters (81) zusätzlich einen Verfeinerungs-Filter (82) umfassen.

## Revendications

1. Procédé pour le traitement d'eaux contaminées par des nitrates; **caractérisé en ce qu'**il comprend: a) le transfert d'une partie de l'eau contaminée directement, sans traitement, dans un réservoir de distribution, b) le traitement du reste de l'eau contaminée par un système d'osmose pour l'obtention d'une quantité d'eau à faible concentration en nitrates, qui est introduite dans le réservoir de distribution, et d'une quantité d'eau avec une haute concentration en nitrates qui est soumise: dans une première phase, à un procédé électrolytique avec une zone réductrice élevée pour assurer la transformation des nitrates en nitrites et des nitrites en nitrogène à l'état gazeux qui est libéré dans l'atmosphère: dans une deuxième phase à un procédé physico-chimique dans lequel se produit la floculation et la décantation des éléments ou particules solides contenues dans l'eau, et dans une troisième phase, à un procédé de filtrage au cours duquel les résidus et les particules solides contenues dans l'eau se séparent et l'eau traitée et filtrée est finalement recueillie dans un réservoir de distribution.

2. Système pour le traitement d'eaux contaminées par des nitrates; **caractérisé en ce qu'**il comprend un premier conduit (1) pour le passage direct d'une quantité d'eau à traiter depuis un réservoir ou aquifère (2) contenant de l'eau contaminée vers un réservoir de distribution (3), un deuxième conduit (4) pour l'impulsion de la quantité restante d'eau vers un système d'osmose (5) muni d'une sortie pour l'eau à faible concentration en nitrates fournie par le système d'osmose, ladite sortie étant connectée par le biais d'un conduit (51) au réservoir de distribution, et d'une sortie d'eau à haute concentration en nitrates fournie par le système d'osmose, ladite sortie étant connectée au conduit (52) dans lequel se trouvent, intercalés et disposés en séries: une cellule électrolytique (6), une station de traitement physico-chimique (7) et plusieurs moyens de filtrage, la sortie dudit conduit (52) étant connectée au réservoir de distribution (3).

3. Système, selon la revendication 3, **caractérisé en ce que** le système d'osmose (5) est équipé de membranes spéciales en polyamide pour l'obtention d'une plus haute concentration de nitrates.

4. Système, selon la revendication 2, **caractérisé en ce que** la cellule électrolytique est du type à haute fréquence et elle est munie d'électrodes qui agissent alternativement, avec une temporisation asymétrique, comme anode et cathode.

5. Système, selon la revendication 2, **caractérisé en ce que** les moyens de filtrage comprennent un filtre-presse (81) pour l'élimination des résidus.

6. Système, selon la revendication 5, **caractérisé en ce que** les moyens de filtrage comprennent en plus un filtre d'affinage (82) à la sortie du filtre-presse (81).
